# EUROPÄISCHE PATENTANMELDUNG

(11) **EP 3 050 784 A1**
(43) Veröffentlichungstag der Anmeldung: **03.08.2016**
(21) Anmeldenummer: 16151870.9
(22) Anmeldetag: 19.01.2016
(51) Int. Cl.: B62H 3/12, E04H 6/14

(54) **AUFHÄNGE-VORRICHTUNG FÜR FAHRRÄDER**

(30) Priorität: 19.01.2015 DE 202015100203 U
(71) Anmelder: Uhl, Herbert, 77746 Schuterwald (DE)
(72) Erfinder: Uhl, Herbert, 77746 Schuterwald (DE)
(74) Vertreter: Weickmann & Weickmann PartmbB

(57) **Zusammenfassung**

Um Fahrräder (**50**) platzsparend und beschädigungssicher mit geringem Raumbedarf aufzubewahren, werden Fahrräder (**50**) in von oben herabhängende Haken (**1**) mit zum Beispiel ihrem Vorderrad eingehängt. Indem Schlitten (**3**) entlang einer Führungsschiene (**2**) verfahrbar sind, an denen sich jeweils ein oder zwei solcher Haken (**1**) befinden, kann der Relativabstand zwischen zwei aufgehängten Fahrrädern (**50**) auf ein Mindestmaß im Aufbewahrungsbereich reduziert werden, was durch weitere Maßnahmen wie Anordnung auf unterschiedlichen Höhen oder unterschiedlichen Querpositionen relativ zur Führungsschiene (**2**) weiter optimiert werden kann.

## Beschreibung

### I. Anwendungsgebiet

Die Erfindung betrifft eine Aufhänge-Vorrichtung für Fahrräder, um Fahrräder im am Vorder- oder Hinterrad aufgehängten Zustand möglichst platzsparend zu lagern.

### II. Technischer Hintergrund

Um auf kleinem Raum möglichst viele Fahrräder zuverlässig und insbesondere verschließbar lagern zu können, sind unterschiedliche Lagersysteme bekannt.

Dabei wird je ein Fahrrad entweder in eine schräg ansteigende oder gar vertikal verlaufende Einstellschiene mit seinen Rädern eingestellt, sodass die Fahrräder horizontal, schräg ansteigend oder fast senkrecht nebeneinander stehen.

Eine andere Möglichkeit besteht darin, das Fahrrad an einen herab hängenden Haken mit seinem Vorderrad oder Hinterrad einzuhängen, wobei ersteres zu bevorzugen ist, da bei Einhängen am Hinterrad das Vorderrad sich aus der Fahrradebene heraus schräg stellen kann und dadurch leichter mit benachbarten aufgehängten Fahrrädern kollidieren kann.

Ein generelles Problem bei Aufbewahrungsvorrichtungen für Fahrräder besteht darin, dass der aus der Fahrradebene seitlich abstrebende Lenker und/oder die Ritzelsätze einer Kettenschaltung das am Weitesten aus der Fahrradebene seitlich vorstehende Teil ist und den Mindestabstand vorgibt, in dem Fahrräder nebeneinander aufbewahrt werden können, vor allem wenn sich die Lenker direkt fluchtend nebeneinander, also nicht zueinander versetzt, befinden.

Hierzu sind unterschiedliche Möglichkeiten bekannt, Fahrräder versetzt zueinander aufzubewahren, sodass der Aufbewahrungsabstand von zwei zueinander benachbarten Fahrrädern, also von Fahrradebene zu Fahrradebene, geringer ist als die doppelte seitliche Lenkerauskragung.

Im horizontal abgestellten Zustand von Fahrrädern ist es hierfür bekannt, Fahrräder abwechselnd mit Vorderrad neben Hinterrad und umgekehrt aufzubewahren.

Bei einer hängenden Aufbewahrung, deren Vorteil in einem geringen konstruktiven Aufwand für die Aufbewahrungsvorrichtung besteht, ist diese Möglichkeit praktisch nicht gegeben, denn wenn jedes zweite Rad am Hinterrad aufgehängt werden würde, würde sich das am unteren Ende durch verdrehen eventuell querstellende Vorderrad mit den benachbarten Fahrrädern kollidieren und verhaken.

### III. Darstellung der Erfindung

### a) Technische Aufgabe

Es ist daher die Aufgabe gemäß der Erfindung, eine Aufhänge-Vorrichtung für mehrere Fahrräder zur Verfügung zu stellen, in der die Fahrräder sicher und wechselseitig beschädigungsfrei mit einer hohen Dichte an Fahrrädern pro Volumeneinheit der Aufhänge-Vorrichtung angeordnet werden können und dabei der bauliche Aufwand hierfür gering bleibt.

### b) Lösung der Aufgabe

Diese Aufgabe wird durch die Merkmale des Anspruchs 1 gelöst. Vorteilhafte Ausführungsformen ergeben sich aus den Unteransprüchen.

Die Verfahrbarkeit der Schlitten, an denen sich jeweils mindestens ein Haken befindet, entlang der Schiene ermöglicht es, beim Einhängen oder Aushängen eines Fahrrades von einem Haken die benachbarten Schlitten und Haken auf größeren Abstand zu bringen, um das Einhängen oder Aushängen eines Fahrrades zu erleichtern, abseits der Ein- oder Aushängestelle jedoch die Schlitten und damit die Haken auf einen minimalen horizontalen Abstand zueinander bringen zu können, sodass gerade noch eine wechselseitige Berührung und Verhakung benachbarter aufgehängter Fahrräder vermieden wird.

Die Schlitten sind dabei in der Regel entlang einer Führungsschiene verfahrbar, entweder einer einzelnen, insbesondere horizontal umlaufend geschlossenen, Führungsschiene oder auch entlang eines Systems von mehreren, sich verzweigenden und vereinigenden, oder auch kreuzenden, Führungsschienen.

An einem Schlitten können in Verfahrrichtung beabstandet auch zwei oder gar mehr Haken befestigt sein, doch ist dann vorzugsweise deren Abstand in Verfahrrichtung nicht veränderbar. Bei zwei Haken an einem Schlitten sind die Öffnungen der Haken vorzugsweise voneinander abgewandt.

Ein Haken, an dem ein Fahrrad eingehängt werden kann, kann auch als Doppel-Haken ausgebildet sein, bei dem zwei Einzelhaken in der Fahrradebene, also quer zur Hakenebene, beabstandet angeordnet sind und das eingehängte Vorderrad oder Hinterrad auf beiden Einzelhaken des Doppel-haken zu aufliegt.

Die Aufbewahrungsdichte von Fahrrädern kann gesteigert werden, wenn die Haken in der Aufsicht auf die im Wesentlichen horizontal verlaufende Führungsschiene so angeordnet sind, dass ein darin eingehängtes Fahrrad mit seiner Fahrradebene quer, insbesondere im rechten Winkel, zur Verfahrrichtung der Schlitten entlang der Führungsschiene hängt und insbesondere der Winkel zwischen der Verfahrrichtung und der Fahrradebene - welche durch den Rahmen des Fahrrades definiert wird - fix ist oder zumindest fixierbar ist.

Denn dann ist der im Aufbewahrungszustand maximal benötigte Abstand zwischen zwei aufeinander folgenden Haken, und damit meist auch Schlitten, höchstens etwas mehr als die Breite des Lenkers eines Fahrrades.

Dieser Aufbewahrungs-Abstand, der minimalste horizontale Abstand zwischen zwei in Haken aufeinander folgender Schlitten hängenden Fahrrädern, kann weiter minimiert werden, wenn dafür Sorge getragen wird, dass die in zwei aufeinander folgende Haken eingehängten Fahrräder mit ihren Lenkern betrachtet in Verfahrrichtung nicht zueinander fluchten, sondern soweit zueinander versetzt sind, dass sie sich in dieser Blickrichtung nicht überlappen:
Eine erste Möglichkeit besteht darin, dass zu diesem Zweck die in Verfahrrichtung aufeinanderfolgenden Haken, etwa aufeinanderfolgender Schlitten, einen entsprechenden Höhenabstand zueinander aufweisen, also mit unterschiedlichem vertikalen Abstand zum Schlitten angeordnet sind.

Dieser vertikale Abstand kann insbesondere auch veränderbar sein, um vor allem das Einhängen eines Fahrrades auf zu großer Höhe für den Benutzer zu vermeiden.

Dies kann erreicht werden, indem zwischen dem Schlitten und dem Haken eine auch vertikal verlaufende Teleskopeinrichtung vorhanden ist oder der Haken an einem im Schlitten aufgewickelten, vertikal abwickelbaren Band, insbesondere einem Metallband, angeordnet ist, dessen Bandebene des abgewickelten Bandabschnittes vorzugsweise in Verfahrrichtung der Schlitten steht, da hierdurch ein Schwenken der Haken in Verfahrrichtung vermieden wird.

Eine andere Möglichkeit besteht darin, dass die in Verfahrrichtung aufeinanderfolgenden Haken, etwa zweier aufeinander folgender Schlitten oder auch zwei aufeinander folgende Haken des gleichen Schlittens, gegenüber dem Schlitten in der horizontalen Querrichtung soweit zueinander beabstandet sind, dass sich die Lenker der darin eingehängten Fahrräder, in Verfahrrichtung betrachtet, nicht mehr überlappen.

Um diesen Abstand der Haken in Querrichtung verändern zu können, kann der Haken am freien Ende eines gegenüber dem Schlitten in Querrichtung teleskopierbaren Teleskoparmes oder am freien Ende eines gegenüber dem Schlitten um eine im Wesentlichen in Verfahrrichtung verlaufende Schwenkachse verschwenkbaren Schwenkarm gelenkig befestigt sein.

Eine weitere Möglichkeit, um die Kollision der Lenker benachbarter Fahrräder zu vermeiden, besteht darin, dass die Haken mit ihrer vertikal verlaufenden Hakenebene - die in der Aufsicht betrachtet als im rechten Winkel zur Fahrradebene des darin eingehängten Fahrrades definiert ist - nicht mit der Verfahrrichtung fluchtet, sondern in einem solchen Winkel zu dieser angeordnet sind, dass zwei benachbarte eingehängte Fahrräder mit ihren Lenkern in der Aufsicht betrachtet nicht kollidieren, sondern sich in Verfahrrichtung überlagern.

Eine weitere Möglichkeit besteht darin, in der Aufsicht betrachtet, die in aufeinanderfolgende Haken eingehängten Fahrräder abwechselnd mit dem Lenker einmal links und einmal rechts von der Führungsschiene aufzubewahren.

Dies kann natürlich erreicht werden, indem die Fahrräder bereits mit einer entsprechenden Lenkerorientierung in den jeweiligen Haken abwechselnd eingehängt werden, was jedoch von der entsprechenden Mithilfe der Benutzer abhängt, ansonsten nicht funktioniert.

Will man sich hierauf nicht vollständig verlassen, so kann - bei einer vom Aufbewahrungsbereich abgegrenzten Ein-/Aushängestation - am Übergang zwischen Ein-/Aushängestation und Aufbewahrungsbereich zum einen ein Sensor hinsichtlich der entsprechenden Orientierung des Lenkers links oder rechts der Führungsschiene und damit des Schlittens vorhanden sein, gekoppelt mit einer nachfolgenden stromabwärtig angeordneten Wendestation, die bei Bedarf das eingehängte Fahrrad durch Drehen des Hakens um seine Hochachse um beispielsweise **180** Grad dreht, bevor im Aufbewahrungsbereich der minimal mögliche horizontale Abstand der Schlitten entlang der Schiene, also der Aufbewahrungs-Abstand, eingenommen wird.

Die zu einander benachbarten Schlitten können in einer ersten Version - außer über die Führungsschiene - keine körperliche Verbindung zueinander besitzen.

Dann muss der gewünschte Abstand - also der minimal mögliche Abstand im Aufbewahrungszustand und ein größerer Abstand beim Ein- oder Aushängen eines Fahrrades - von Hand hergestellt werden und vorzugsweise auch das Verschieben der Schlitten mit den Haken von einer eventuell vorhandenen Ein-/Ausgabestation in einem Aufbewahrungsbereich und umgekehrt, wenn solche getrennten Bereiche bei der Aufhängevorrichtung überhaupt vorhanden sind.

Bevorzugt ist jedoch eine zweite Version der Aufhängevorrichtung, bei der die an den Haken hängenden Fahrräder sicher und geschützt aufbewahrt werden, beispielsweise in einem Gebäude, und dabei zwischen einer für Benutzer zugänglichen Ein-/Aushängestation und einem räumlich, insbesondere durch Trennwände, getrennten Aufbewahrungsbereich, indem die höchste Aufbewahrungsdichte von Fahrrädern erzielt werden soll, zu unterscheiden. Der Aufbewahrungsbereich ist für den normalen Benutzer nicht zugänglich ist, um vor allem Diebstahl von Fahrrädern zu vermeiden.

In einer solchen automatisierten Aufbewahrungsstation werden die Schlitten von einer Steuerung gesteuert zwischen dem Aufbewahrungsbereich und der Ein-/Aushängestation verfahren, und vor allem beim gewünschten Entnehmen, einem Aushängen eines Fahrrades, der Schlitten, der dem vom Benutzer in eine Eingabeeinheit der Steuerung eingegebene Schlitten-Nummer entspricht, in der Ein-/Ausgabestation zur Verfügung gestellt.

In einer solchen automatisierten Aufhänge-Vorrichtung ist es sinnvoll, dass der einzelnen Schlitten zumindest abschnittsweise untereinander über ein Verbindungselement, insbesondere ein Abstandselement, miteinander verbunden sind, um nicht jeden einzelnen Schlitten separat automatisch und damit motorisch entlang einer Führungsschiene antreiben zu müssen. Ein solches Verbindungselement kann beispielsweise
- ein nur auf Zug belastbares Verbindungselement, wie etwa ein Seil, sein , welches nur einen maximalen Abstand zwischen zwei damit verbundenen Schlitten bewirken kann, der minimale Abstand der beiden Schlitten dann jedoch die gegenseitige Berührung sein kann oder auch
- ein teleskopierbares Abstandselement, welches eine maximale und eine minimale Länge besitzt.

Die Schlitten können dauerhaft mit einem oder beidseits je einem solchen Verbindungselement, insbesondere Abstandselement zu jedem der benachbarten Schlitten verbunden sein.

Die minimale Länge, also der minimal durch das Abstandselement erzeugte Abstand zwischen zwei benachbarten Schlitten, beträgt mindestens **25** cm, besser mindestens **30** cm, besser mindestens **35** cm.

Die maximale Länge des längenveränderbaren Abstandselementes wird
- entweder abhängig vom kleinsten in der Aufhänge-Vorrichtung vorhandenen Krümmungsradius der Führungsschiene ausgewählt und beträgt insbesondere mindestens **45** cm, besser mindestens **50** cm, besser mindestens **55** cm
- oder beträgt **0,25** m² geteilt durch den Krümmungsradius, jedoch nicht weniger als die minimale Länge.

Die Schlitten können jedoch auch mit einem insbesondere endlos umlaufenden Verbindungselement, wie etwa einem Seil oder einer Kette, koppelbar und entkoppelbar sein, um beispielsweise in Abschnitten wie der Ein-/Ausgabestation still zu stehen oder bei Bedarf innerhalb der Aufhänge-Vorrichtung vorwärts transportiert zu werden durch das sich bewegende Verbindungselement.

Das Verbindungselement kann dabei auch - zumindest abschnittsweise - die Funktion der Führungsschiene erfüllen, die somit nicht starr ausgebildet sein muss, sondern über entsprechende Führungselemente wie Führungsrollen geführt auch flexibel ausgeführt sein kann, wie beispielsweise das kombinierte Zug- und Tragseil eines heute üblichen Sesselliftes in den Bergen, an dem der einzelne Sessel für den schnellen Transport bergauf oder bergab anders Seil angekoppelt wird und für das Ein- und Aussteigen der Passagiere in einer Ein-/Aussteigestation von dem Seil abgekoppelt und mittels separater Transportvorrichtungen nur langsam transportiert und auch angehalten werden kann.

Ein längenveränderbares Abstandselement wie etwa ein teleskopierbares Abstandselement hat den Vorteil, dass im Aufbewahrungsbereich der Aufhänge-Vorrichtung dieses vorzugsweise horizontal ausgerichtete, längenveränderbare, insbesondere teleskopierbare Abstandselement seinen minimalen Abstand einnehmen kann, um eine hohe Aufbewahrungsdichte an Fahrrädern zu erreichen. J

In anderen Bereichen, wie etwa der Ein-/Aushängestation oder im Bereich einer Kurve der Führungsschiene, wird die maximale Länge des insbesondere teleskopierbaren Abstandselements eingenommen wird und damit ein größerer Abstand von den in die benachbarten Schlitten eingehängten Fahrrädern, um beispielsweise das Ein-/Aushängen zu erleichtern oder eine Kollision von Fahrrädern bei Kurvenfahrt auf der Kurveninnenseite zu vermeiden.

Ein solches längenveränderbares, zum Beispiel teleskopierbares, Abstandselement ermöglicht es auch, in bestimmten Abschnitten der Führungsschiene die Schlitten durch Schieben vorwärts zu bewegen, indem an einem solchen Abschnitt am stromaufwärtigen Ende in Verfahrrichtung ein Antrieb für die Schlitten angeordnet wird oder in anderen bestimmten Abschnitten ziehend zu bewegen, indem in einem solchen Abschnitt am stromabwärtigen Ende eine Antriebseinheit für die Schlitten angeordnet wird.

Die Ausbildung der gesamten Aufhänge-Vorrichtung hängt stark von der Anzahl der unterzubringenden Fahrräder und den vorhandenen räumlichen Gegebenheiten hinsichtlich vorhandener Grundfläche oder möglicher Höhe der aufhänge-Vorrichtung ab:
Bei einer nur begrenzten unterzubringenden Anzahl von Fahrrädern kann es ausreichend sein, ein endliches, gerades Stück einer Führungsschiene mit entsprechender Anzahl von Schlitten darin vorzusehen, wobei die Führungsschiene an jeder ihrer Längspositionen für den Benutzer zugänglich ist und er sich zum Einhängen eines Fahrrades lediglich einen entsprechenden leeren Haken auswählt, die benachbarten Schlitten und Haken zum erleichterten Einhängen seines Fahrrades auf Abstand schiebt und dann sein Fahrrad einhängt.

Durch das gleiche Verhalten des nächsten einhängenden Benutzers werden die meisten der Schlitten dann wieder auf den durch den minimalen Abstand eines zwischen den Schlitten vorhandenen Abstandselementes erwünschten geringen Aufbewahrungs-Abstand gebracht.

Eine größere Anzahl von Fahrrädern kann dann untergebracht werden, wenn beispielsweise mehrere solcher einzelner, vorzugsweise gleich langer, Führungsschienen ihrerseits beispielsweise mit ihren Enden oder wenigstens einem ihrer Enden geführt , jedenfalls entlang einer Tragvorrichtung bewegbar sind, sei es entlang eines Kreises oder Ovales in einer horizontalen Ebene, sei es entlang von vertikalen Tragschienen in einer vertikalen oder in der Seitenansicht oval umlaufenden Bahn, sodass der Benutzer mit Hilfe einer Steuerung und motorischen Antriebes für die Führungsschienen diejenige Führungsschiene, in der sich sein Fahrrad befindet, zu der Ein-/Aushängestation verfahren lässt.

Dabei können in der Ein-/Aushängestation die Führungsschienen auf einen großen Querabstand gebracht werden, um den Benutzer dazwischen eintreten zu lassen, im davon getrennten Aufbewahrungsbereich die Führungsschienen dagegen so minimal eng gegeneinander gefahren werden, dass eine gegenseitige Berührung darin eingehängter Fahrräder gerade noch vermieden wird.

Die einzelnen Schlitten können dabei auch mittels entsprechender Vorrichtungen von einer in eine benachbarte Führungsschiene verbracht werden, unabhängig davon, ob diese Führungsschienen horizontal zueinander beabstandet sind oder vertikal zueinander beabstandet sind.

Ebenso können horizontal beabstandete Führungsschienen an einer Tragvorrichtung befestigt sein, auch in einem zueinander variablen Abstand, und diese gesamte Tragvorrichtung, beispielsweise vertikal, bewegbar sein, sodass Fahrräder in mehreren Etagen übereinander eingelagert werden können.

Bevorzugt sind dabei jedoch Lösungen, bei denen der Benutzer die Haken zum Ein- und Aushängen eines Fahrrades nur an einer definierten Ein-/Aushängestation erreichen kann, und abseits dieser Ein-/Aushängestation, also im Aufbewahrungsbereich, der auch vorzugsweise durch für den Benutzer nicht durchtretbare Trennwände abgegrenzt ist, die Haken und damit darin eingehängte Fahrräder für den Benutzer nicht zugänglich sind und der Aufbewahrungsbereich insbesondere vollumfänglich von Wänden und einer Decke oder Dach verschlossen ist.

Um zusätzlich den Diebstahl eines Fahrrades aus einem Haken zu vermeiden oder stattdessen, kann der Haken als Karabiner ausgebildet sein, und die bewegliche Karabiner-Lasche in ihrer den Karabiner verschließen den Schließstellung abgesperrt werden, z.B. Mittels eines Schlüssels, den im Aufbewahrungszustand der Benutzer abzieht und bei sich behält.

Eine typische Bauform einer größeren, automatisierten Aufhänge-Vorrichtung besteht in einer endlos umlaufenden Führungsschiene, entlang der die Schlitten automatisch transportiert werden, und dem Benutzer entweder ein leerer Haken zum Einhängen eines Fahrrades oder ein von ihm vorgegebener bestimmter Haken, an dem sich sein Fahrrad befindet, in der Ein-/Aushängestation zur Verfügung gestellt wird.

Eine solche endlose Führungsschiene kann vorzugsweise in einer horizontalen Ebene umlaufen, oder auch ein dreidimensionales Gebilde darstellen.

Vorzugsweise sind dabei die aufeinander folgenden Schlitten jeweils durch eines der beschriebenen längenveränderbaren, insbesondere teleskopierbaren, Abstandselemente miteinander verbunden, sodass sie im Aufbewahrungsbereich im Wesentlichen den minimalen Aufbewahrungsabstand, begrenzt durch die minimale Länge des zum Beispiel teleskopierbaren Abstandselementes, einnehmen, in anderen Bereichen dagegen den durch die maximale Länge des zum Beispiel teleskopierbaren Abstandselement vorgegebenen maximalen Abstand.

Der maximale Abstand ist beispielsweise in der Ein-/Aushängestation erforderlich, um das bequeme Einhängen des Fahrrades an einem Haken durch die Benutzer zu ermöglichen.

Der maximale Abstand kann auch im Bereich starker Krümmungen, wie etwa **90**-Grad-Kurven oder **180**-Grad-Kurven, der Führungsschiene erforderlich sein, um auf der Kurveninnenseite das Berühren und Verhaken von benachbarten Fahrrädern zu vermeiden.

In welchen Abschnitten welcher Abstand der Schlitten zueinander eingenommen wird, kann durch das Zusammenspiel eines der längenveränderbaren Abstandselemente mit einer die gesamte Aufhängevorrichtung, insbesondere alle seiner bewegten Teile, steuernden Steuerung und eventuell wenigstens einem vorhandenen Sensor automatisch bewirkt werden.

Der wenigstens eine Sensor kann beispielsweise
- die Lage des Lenkers jedes eingehängten Fahrrades links oder rechts der Führungsschiene detektieren und/oder
- den tatsächlichen Abstand benachbarter eingehängter Fahrräder im Aufbewahrungsbereich oder zu Beginn des Einschleusens in den Aufbewahrungsbereich und/oder
- die Tatsache der Belegung eines Hakens mit einem Fahrrad.

Dem Sensor zum erkennen der Lage des Sensors kann stromabwärts nachgeordnet eine Wendevorrichtung neben der Führungsschienen angeordnet sein, die die drehbaren Schlitten befestigten Haken automatisch und gesteuert von der Steuerung so dreht, dass sich die Lenker der darin eingehängten Fahrräder in der gewünschten Lage befinden, beispielsweise in der Aufsicht von oben betrachtet abwechselnd links und rechts von der Führungsschiene.

Für das Durchfahren einer in der Aufsicht betrachteten Biegung der Führungsschiene besitzen die Schlitten, vorzugsweise an ihrem in Verfahrrichtung vorderen oder hinteren Ende, jeweils
- entweder eine einzige Führungsrolle, die im Inneren einer U-förmigen oder C-förmigen Führungsschiene läuft
- oder zwei in Querrichtung voneinander beabstandete Führungsrollen, zwischen denen eine vertikal ausgerichtete stegförmige Führungsschiene hindurch verläuft, wobei der Grundkörper des Schlittens sich dann oberhalb oder unterhalb der Führungsschiene befindet.

Auch das längenveränderbare Abstandselement zwischen zwei benachbarten Schlitten befindet sich vorzugsweise oberhalb oder unterhalb der Führungsschiene, um bei einer in der Aufsicht betrachteten Krümmung der Führungsschiene eine Sekante zum Verlauf der Führungsschiene im geometrischen Sinn darstellen zu können.

Eine einfache Form des Antriebes der Schlitten entlang der Führungsschiene besteht darin, dass von dem, insbesondere jedem, Schlitten ein Antriebszapfen über den Querschnitt der Führungsschiene hinaus vorsteht, der von einem Antriebselement kontaktiert werden kann und dadurch der Schlitten entlang der Führungsschiene weiter transportiert werden kann.

Ein solches Antriebselement kann beispielsweise ein von einem Motor drehend angetriebener, vorzugsweise neben der Führungsschiene angeordneter, Rotor sein, von dem Rotorarme radial von seiner Rotationsachse abstreben und in den Bewegungsweg der Antriebszapfen hineinragen.

Die über Abstandselemente, insbesondere längenvariable Abstandselemente, verbundenen Schlitten können auf diese Art und Weise entlang der Führungsschiene geschoben werden, wobei sie dann dem durch das längenvariable Abstandselement einnehmbaren minimalen Abstand beabstandet sind.

Die über Abstandselemente, insbesondere längenvariable Abstandselemente, verbundenen Schlitten können auf diese Art und Weise entlang der Führungsschiene jedoch auch gezogen werden, wobei sie dann den durch den maximalen Abstand des längenveränderbaren Abstandselements bedingten Abstand zueinander einnehmen.

### c) Ausführungsbeispiele

Ausführungsformen gemäß der Erfindung sind im Folgenden beispielhaft näher beschrieben. Es zeigen:

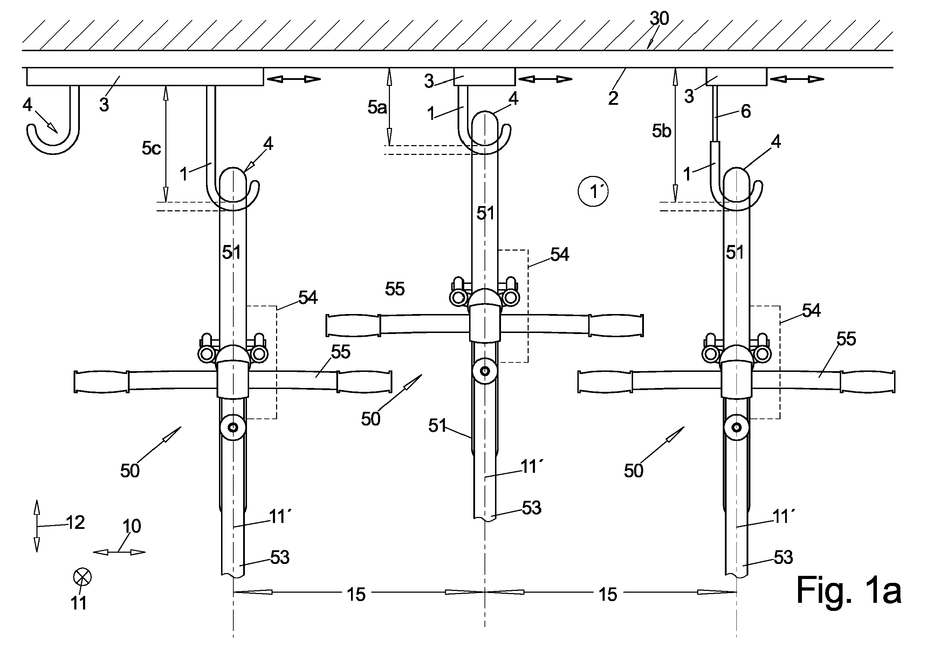

- Figur **1a**:: einen Teil der Aufhänge-Vorrichtung, betrachtet in der horizontalen Querrichtung,
- Figur **1**b, c:: einen Teil der Aufhänge-Vorrichtung, betrachtet in der Aufsicht von oben,
- Figur **2**a, b:: eine Aufhänge-Vorrichtung ganz und in einer Detailvergrößerung in der Aufsicht von oben,

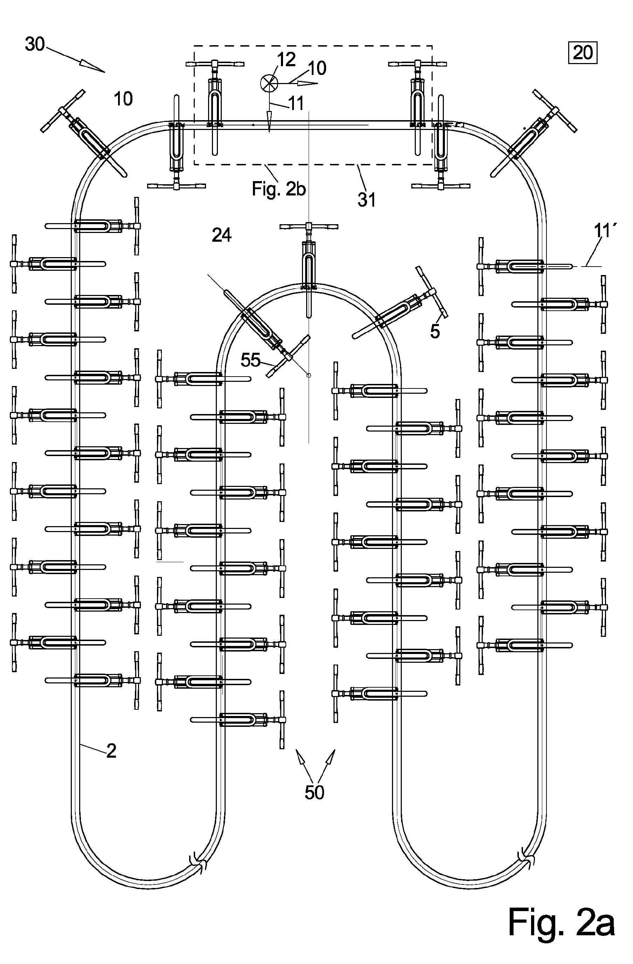

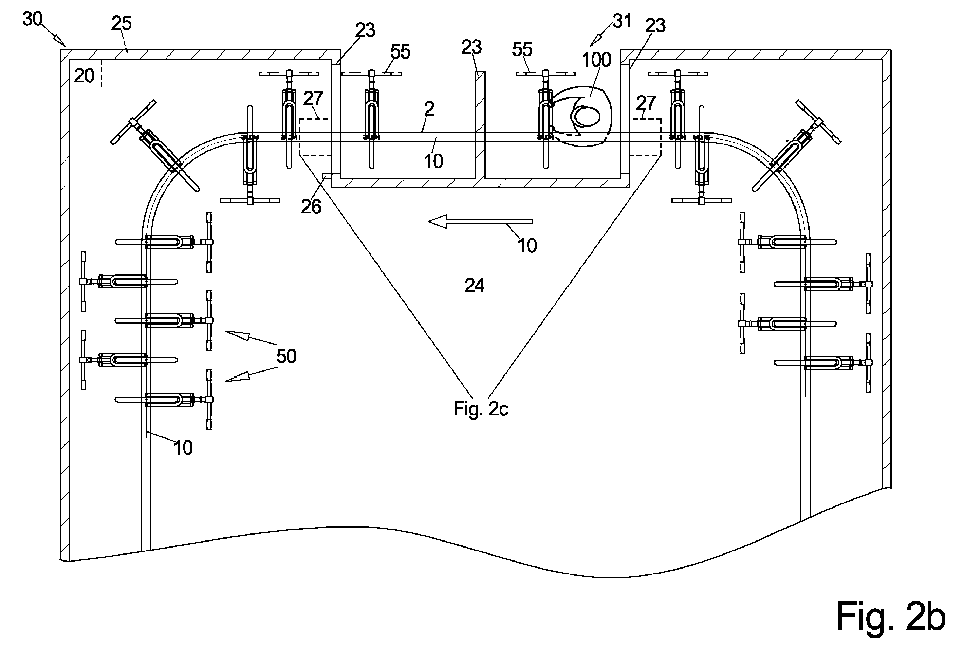

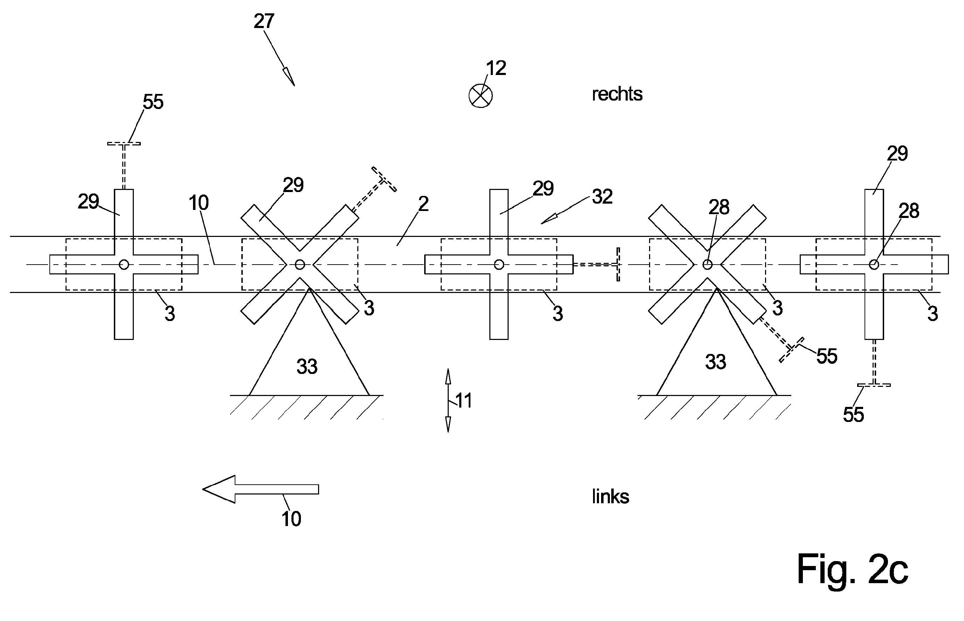

- Figur **2**c:: die Wendevorrichtung einer Aufhänge-Vorrichtung in der Aufsicht von oben,

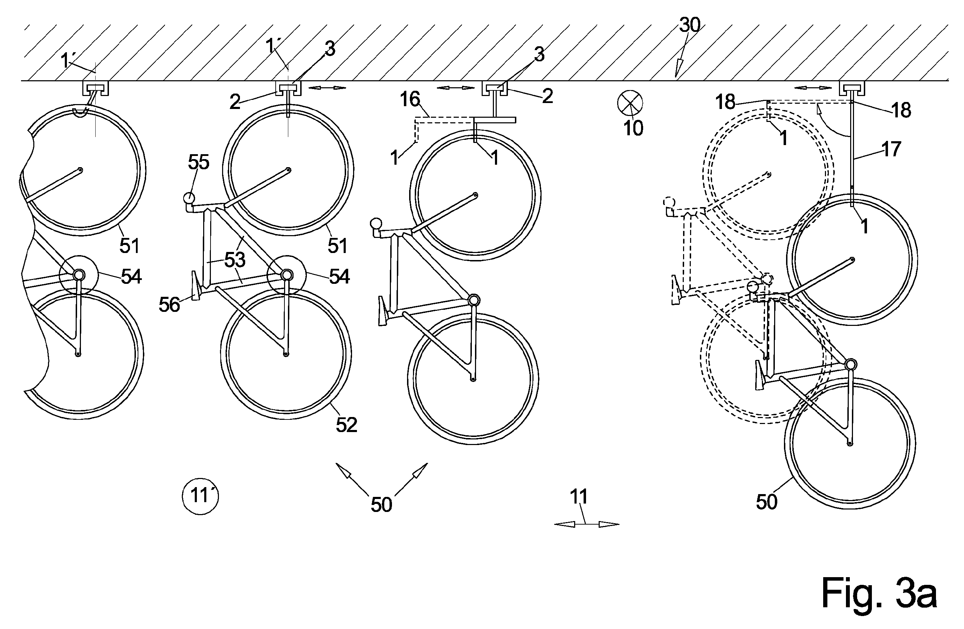

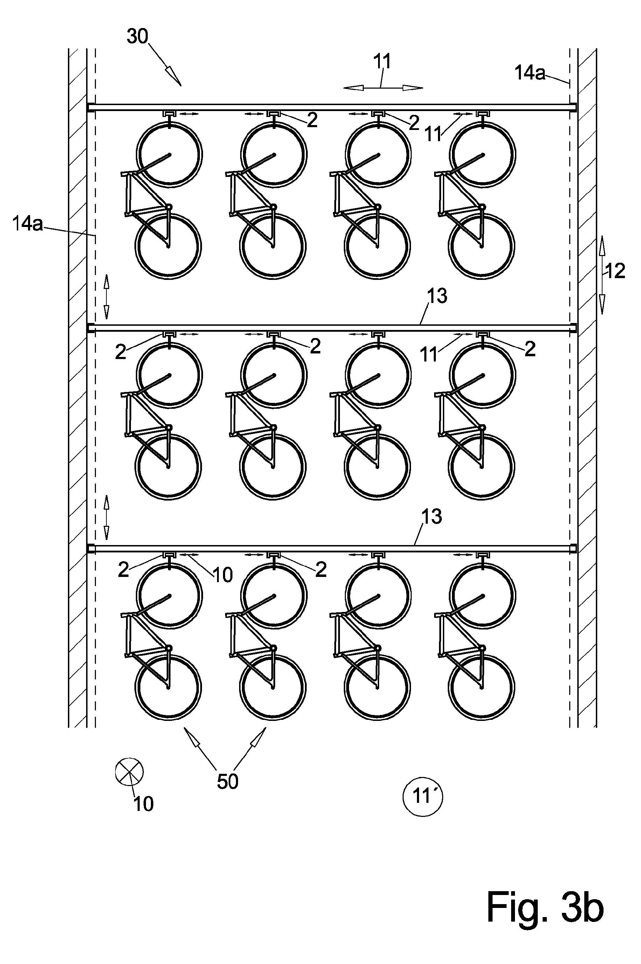

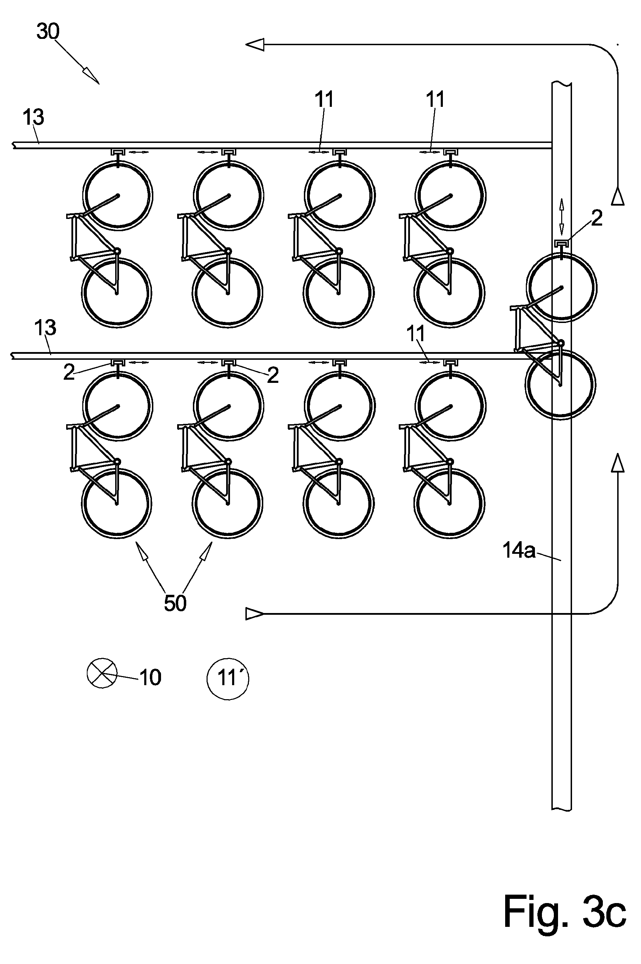

- Figur **3**a - c:: Teile anderer Bauformen der Aufhänge-Vorrichtung, betrachtet in der Verfahrrichtung der Schlitten

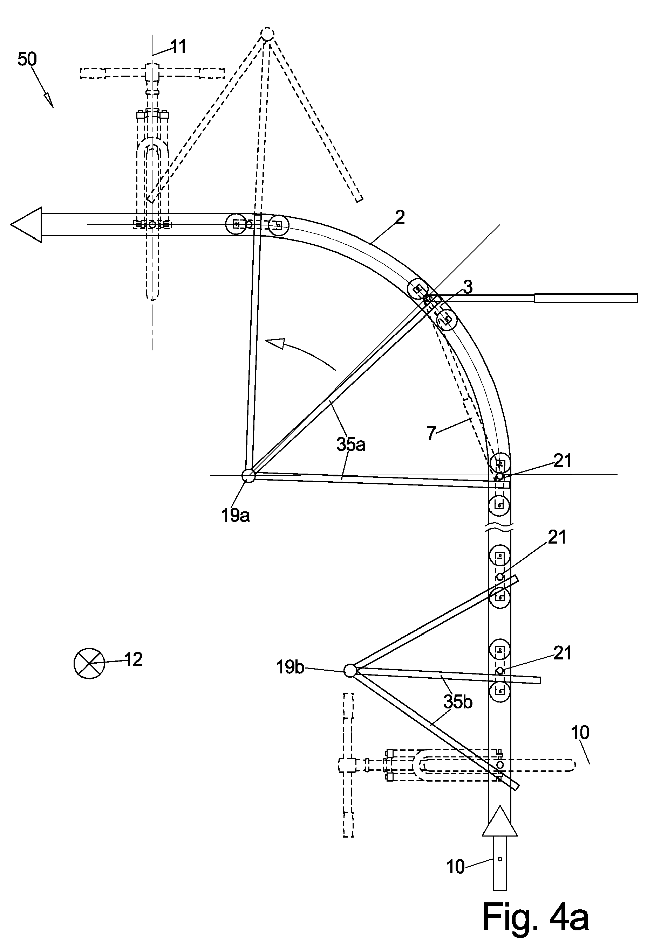

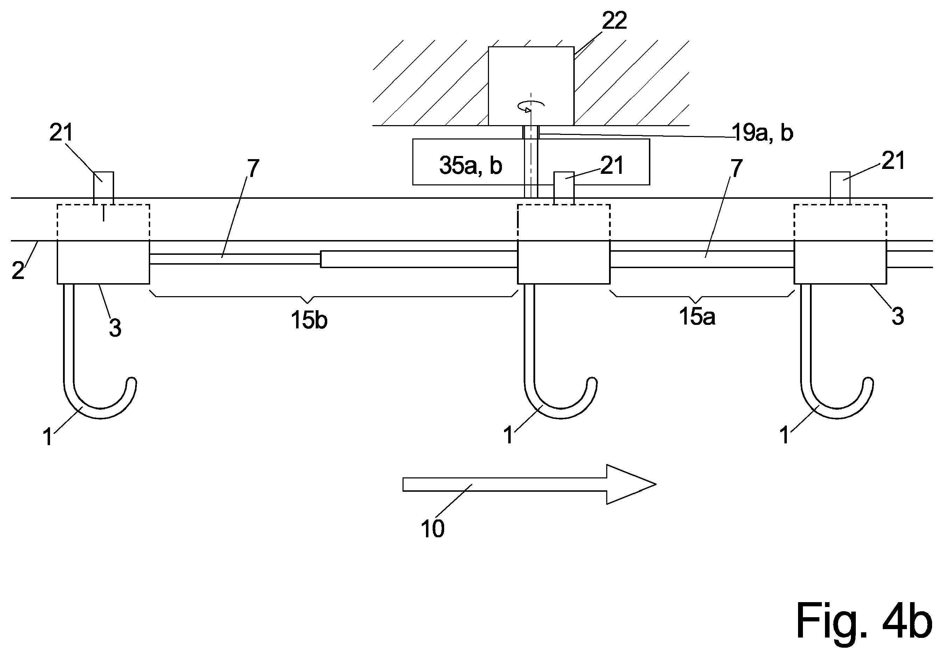

- Figur **4**a:: Antriebseinheiten der Aufhänge-Vorrichtung in der Aufsicht von oben,
- Figur **4**b:: eine Antriebseinheit der Aufhänge-Vorrichtung, betrachtet in der horizontalen Querrichtung.

**Figur 1a** zeigt das Grundprinzip der erfindungsgemäßen Aufhänge-Vorrichtung **30:**
Fahrräder **50** können hängend aufbewahrt werden, indem sie mit der Felge eines ihrer Räder, vorzugsweise des Vorderrades **51,** in einen nach oben und/oder zur Seite hin offenen Haken **1** eingehängt werden, der mit einem seiner freien Ende an einem Schlitten **3** befestigt ist, welcher in im wesentlichen horizontaler Verfahrrichtung **10** entlang einer Führungsschiene **2** verschiebbar und vorzugsweise auch gesteuert verfahrbar ist.

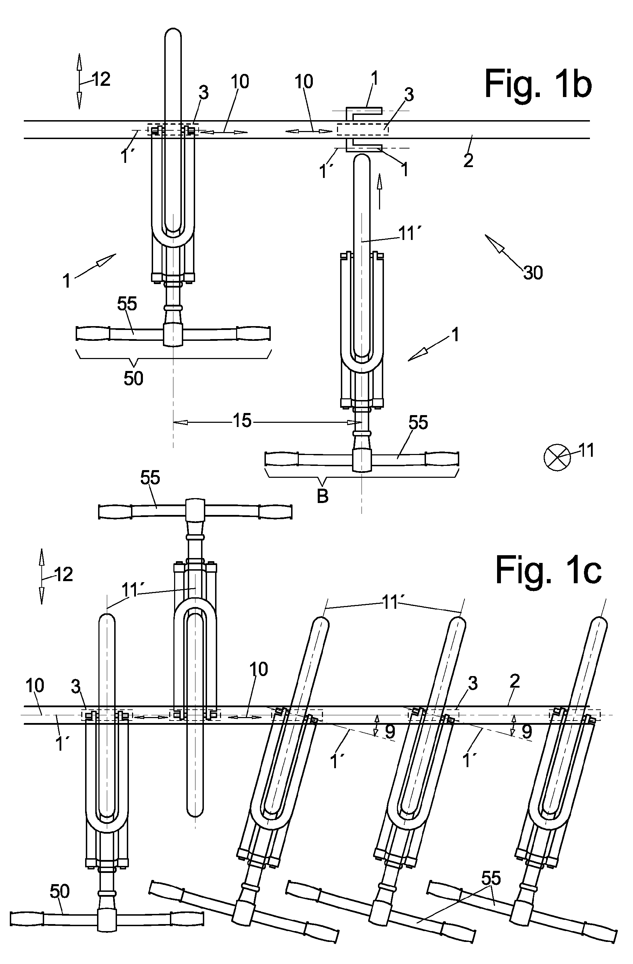

Der Haken **1** verläuft dabei meist in einer vertikal stehenden Hakenebene **1',** in der entweder die Verfahrrichtung **10,** also die Längsrichtung der Führungsschiene **2,** ebenfalls liegt oder die zu der Hakenebene **1'** einen Winkel **9** einnimmt - wie am besten in der Aufsicht der **Figur 1****c** von oben zu erkennen - der ein spitzer Winkel ist.

In den Haken **1** wird ein Fahrrad **50** mit der Felge eines seiner Räder, vorzugsweise des Vorderrades **51,** eingehängt, indem der Haken **1** zwischen den Speichen des Rades die Felge untergreift. Dadurch hängt das aufgehängte Fahrrad **50** in der Aufsicht betrachtet mit seiner Fahrradebene **11'** - die durch den Rahmen **53** des Fahrrades **50** definiert wird - gemäß der Aufsicht der **Figur 1****c** quer, insbesondere lotrecht, zu der Verfahrrichtung 10, der Richtung der Führungsschiene **2.**

Die vertikal stehende Hakenebene **1'** einerseits und vertikal stehende Fahrradebene **11'** andererseits verlaufen also in der Aufsicht betrachtet meist im rechten Winkel zueinander.

Dies gilt auch dann, falls der Haken **1** nicht - wie in den meisten Figuren dargestellt - zweidimensional in der Hakenebene **1'** verläuft, sondern dreidimensional geformt ist, wie in **Figur 3a** links oben dargestellt. Auch dann wird als Hakenebene **1'** diejenige vertikal verlaufende Ebene definiert, die, in der Aufsicht betrachtet, im rechten Winkel zu der Fahrradebene **11'** eines darin eingehängten Fahrrades **50** verläuft.

Das erfindungsgemäße Ziel, Fahrräder platzsparend in einer solchen Aufhängevorrichtung unterzubringen, trotz einfacher Handhabung, also in diesem Fall Einhängen und Aushängen, der Fahrräder wird durch Verschiebbarkeit der Schlitten **3** unabhängig voneinander oder auch abhängig voneinander entlang der Führungsschiene **2** ermöglicht:
Im einfachsten Fall kann die Aufhänge-Vorrichtung **30** manuell betätigt werden:
   Will man in einen bestimmten Haken **1** sein Fahrrad **50** einhängen, werden die beiden auf je einer Seite davon befindlichen benachbarten Haken **1 -** sofern daran bereits ein Fahrrad **50** hängt - so weit auf Abstand zu dem vorgesehenen Haken **1** gebracht, dass man sein Fahrrad **50** problemlos in diesen Haken **1** einhängen kann, ohne mit benachbarten Fahrrädern **50** zu kollidieren.

Danach können die eingehängten benachbarten Fahrräder **50** durch Verschieben deren Schlitten **3** so nah wie möglich aneinander geschoben werden, sodass die benachbarten Fahrräder **50** gerade nicht miteinander kollidieren, aber eine hohe Packungsdichte an aufbewahrten Fahrrädern erreicht wird.

An einem Schlitten **3** kann entweder nur ein Haken **1** befestigt sein, der von dem Schlitten **3** dann vorzugsweise in vertikaler Richtung herabragt oder herabhängt - wie in **Figur 1a** an den linken beiden Schlitten **3** dargestellt - oder an einem Schlitten **3** kann auch an den beiden in Längsrichtung **10** beabstandeten Enden je ein Haken **1** angeordnet sein, die mit ihren Einhängeöffnungen **4** in Verfahrrichtung **10** voneinander wegweisen.

Die Packungsdichte an Fahrrädern **50** innerhalb der Aufhänge-Vorrichtung **30** im Aufbewahrungszustand, also im maximal aneinander angenäherten Zustand, kann durch zusätzliche Maßnahmen stark erhöht werden gegenüber Ausgestaltungen, bei denen die Lenker **55** der eingehängten Fahrräder **50** sich fluchtend zueinander sowohl in horizontaler Querrichtung **11** als auch in der Aufsicht, der Vertikalen **12,** betrachtet jeweils fluchtend zueinander befinden, denn die Breite B eines Fahrrades **50** wird ja in aller Regel durch die Breite des Lenkers **55** bestimmt.

Wie **Figur 1b** in der Aufsicht bei einem Einhängevorgang eines Fahrrades **55** zeigt, muss beim Einhängen eines Fahrrades **55** in einen leeren Haken 1 der in Verfahrrichtung **10** gemessene horizontale Abstand **15** zu jeder der beiden benachbarten Fahrradebenen **11** größer sein als die Summe der halben Breiten B dieser je zwei benachbarten Fahrräder **50,** wenn sich die Lenker **55** im eingehängten Zustand sowohl vertikal als auch in horizontaler Querrichtung **11** fluchtend zueinander befinden.

Eine erste Möglichkeit besteht darin, wie in **Figur 1a** dargestellt, zwei benachbarte Haken **1** nicht auf der gleichen Höhe, also im gleichen vertikalen Abstand zur Führungsschiene **2** anzuordnen, sondern auf so stark unterschiedlichen Abständen **5**a, b, oder gar c, so dass die Lenker **55** zweier benachbarter, also in diese beiden Haken **1** eingehängter, Fahrräder **50** nicht miteinander kollidieren trotz Überlappung der Breite B der Fahrräder **50** in Verfahrrichtung **10** der Schlitten **3,** in dem der horizontale Abstand **15** zwischen zwei Fahrrädern geringer ist als dessen Breite B.

Dementsprechend können auch die beiden voneinander wegweisenden Haken **1,** die gemäß Figur **1**a im linken Beispiel am selben Schlitten **3** montiert sind, einen unterschiedlichen Abstand **5**a, **5**c zur horizontal verlaufenden Führungsschiene **2** besitzen.

Eine andere Möglichkeit besteht darin, im Aufbewahrungszustand die Fahrräder **50** so anzuordnen, dass in Verfahrrichtung **10** die einzelnen Fahrräder **50** abwechselnd - in der Aufsicht betrachtet - gemäß **Figur 1c**, **linke Bildhälfte** mit dem Lenker **55** einmal auf der einen und einmal auf der anderen Seite der Führungsschiene **2** hängt.

Eine weitere Möglichkeit besteht darin, dass die Hakenebene **1'** in der Aufsicht betrachtet nicht mit der Verfahrrichtung **10** fluchtet, sondern in einem - vorzugsweise jeweils gleichen - Winkel **9** zu dieser verläuft, wie in **Figur 1c****,** rechte Bildhälfte, dargestellt. Auch dies bewirkt die Vermeidung einer Kollision der Lenker **55** benachbarter Fahrräder **50.**

Ein weitere Möglichkeit besteht darin, im Aufhängezustand die Haken **1** nicht alle in derselben Position in der horizontalen Querrichtung **11** anzuordnen, als beispielsweise nicht alle genau unter dem sie tragenden Schlitten **3,** wie dies in **Figur 3a** bei den Rechten beiden Führungsschienen **2** dargestellt ist:

So können die Haken **1** von in Verfahrrichtung **10** aufeinander folgenden Schlitten **3** entlang einer Führungsschiene **2** abwechselnd eine unterschiedliche Position in der horizontalen Querrichtung **11** einnehmen, beispielsweise abwechselnd ein Haken genau unter dem Schlitten **3** und ein Haken in der horizontalen Querrichtung **11** hierzu versetzt mittels eines Querarmes, an dessen freien Ende der Haken **1** angeordnet ist.

Ein solcher Querarm kann - wie in Figur **3** a beim zweiten Fahrrad von rechts dargestellt - als in horizontaler Querrichtung **11** abragender Querarm, insbesondere ausfahrbarer Teleskoparm **16,** ausgeführt sein, um die Position des darin eingehängten Fahrrades in der Querrichtung **11** versetzen, insbesondere variieren, zu können.

Ein solcher Querarm kann auch als Schwenkarm **17** um eine in Verfahrrichtung **10** verlaufende Schwenkachse **18** gegenüber dem Schlitten **3** verschwenkbar sein, wodurch sich ebenfalls die Querposition eines darin eingehängten Fahrrades **50** verändern lässt. Letzteres hat den Vorteil, dass zum Beispiel das Fahrrad **50** in der tiefliegenden Position des Hakens **1,** also mit nach unten geschwenktem Schwenkarm **17,** eingehängt werden kann und für den Benutzer nicht der Kraftaufwand zum Hochheben des Fahrrades **50** bis in die angehobene, nach oben geschwenkte Position des Hakens **1** erforderlich ist. Der Haken **1** seinerseits muss vorzugsweise um eine wiederum in Verfahrrichtung **10** verlaufende Schwenkachse **18** am freien Ende des Schwenkarmes **17** befestigt sein.

Die vorstehenden Maßnahmen können natürlich auch miteinander kombiniert werden.

Ebenso können bei der Schrägstellung der Fahrräder zig im Aufbewahrungszustand gemäß **Figur 1c****, rechte Hälfte,** die Fahrräder beim Einhängen mit ihrer Fahrradebene **11'** in der Aufsicht betrachtet lotrecht zur Fahrrichtung **10,** eingehängt werden in einen Haken **1,** dessen Hakenebene **1**' dann ebenfalls in der Aufsicht betrachtet in Verfahrrichtung **10** verläuft, und erst danach durch Verschwenken des Hakens **1** gegenüber dem Schlitten **3** der Winkel **9** zwischen Hakenebene **1'** und der Verfahrrichtung **10** hergestellt werden.

Damit die Fahrradebene **11'** im aufgehängten Zustand des Fahrrades **50** möglichst genau in der Aufsicht betrachtet lotrecht zur Hakenebene bleibt, ist gemäß **Figur 1b****,** rechts vorzugsweise jeder Haken als Doppelhaken ausgebildet mit zwei in der Aufsicht lotrecht zur Hakenebene **1'** beabstandeten einzelnen Haken **1,** wodurch sich die eingehängte Felge des Fahrrades **55** weniger leicht gegenüber dem Haken **1** verdrehen kann als bei einem Einzelhaken.

Vorzugsweise sind die beiden einzelnen Haken **1** eines solchen Doppelhakens quer zur Hakenebene **1'** in ihrem Abstand begrenzt verstellbar, um unabhängig von der konkreten Bauform des Fahrrades **50** ein Eintauchen der beiden einzelnen Haken **1** zwischen die Speichen und damit quer zur Fahrradebene **11** zuverlässig zu ermöglichen.

Wenn nur eine sehr begrenzte Anzahl von Fahrrädern **50** aufbewahrt werden soll, genügt eine einfache, endlich lange Führungsschiene **2,** und das Zusammenschieben der Fahrräder **50** nach Aufhängung in einen engen beabstandeten Aufbewahrungszustand.

Sollen dagegen größere Mengen Fahrräder **50,** etwa an einem Bahnhof, nach dem Grundprinzip der vorliegenden Erfindung aufbewahrt werden, sind zusätzliche Maßnahmen notwendig:
Die **Figuren 3b** **und** **3c** zeigen in der Seitenansicht Aufhänge-Vorrichtungen **30,** mit denen Fahrräder **50** in mehreren Etagen übereinander aufbewahrt werden können.

Bei der Lösung gemäß **Figur 3b** sind in jeder Etage vorzugsweise horizontal parallel nebeneinander Führungsschienen **2** angeordnet, in denen jeweils eine Vielzahl von Schlitten **3** und darin potentiell eingehängten Fahrrädern **50** angeordnet sind.

Nachdem eine der Führungsschienen **2** vorzugsweise vollständig mit Fahrrädern **50** gefüllt ist, indem also an jedem seiner Haken **1** ein Fahrrad **50** hängt, können die einzelnen Führungsschienen **2** in der horizontalen Querrichtung **11 -** vorzugsweise hängend an einer oder mehreren, über alle auf gleicher Höhe angeordneten Führungsschienen **2** durchgehenden Tragvorrichtung **13** - relativ zueinander verschoben werden, sodass die Fahrräder **50** benachbarter Führungsschienen **2** eine optimal nahe Position zueinander einnehmen können, was während des Einhängevorganges noch nicht möglich ist.

Dazu können - in der Aufsicht betrachtet - die Schlitten **3** und damit Fahrradebenen **11'** zweier benachbarter Führungsschienen **2** auch in Verfahrrichtung **10** versetzt zueinander angeordnet sein, um die Fahrräder **50** zweier benachbarter Führungsschienen **2,** also Reihen von Fahrrädern **50,** in der Aufsicht betrachtet in die jeweils andere Reihe etwas eintauchen zu lassen.

Dabei muss natürlich nicht nur eine Kollision der Lenker **55** ausgeschlossen werden, sondern auch eine Berührung des jeweiligen Ritzelsatzes **54** der einzelnen Fahrräder **50, -** wie in **Figur 3a** beispielhaft eingezeichnet - da dieser besonders empfindlich auf Berührungen und Beschädigungen reagiert.

Zusätzlich und/oder ergänzend hierzu können gemäß **Figur 3b** die einzelnen Tragvorrichtungen **13,** an denen nebeneinander die Führungsschienen **2** laufen, in der Vertikalen **12** verfahrbar sein, indem sie mit ihren Enden in vertikal verlaufenden Führungsschienen **14**a geführt sind und die Vertikalbewegung dann vorzugsweise motorisch angetrieben und auch gesteuert wird.

Auf diese Art und Weise können in einem Gebäude auf schmaler Grundfläche extrem viele Fahrräder **50** untergebracht werden, wobei vorzugsweise die Tragvorrichtungen **13** für die Führungsschienen **2** beispielsweise als Paternoster umlaufend in einem Gebäude angeordnet sein können.

Die Zugänglichkeit zu einem bestimmten Fahrrad **50** kann dann auf einer vorgesehenen Ein-/Aushängeebene dadurch erreicht werden, dass der Benutzer zwischen zwei Führungsschienen **2** hineingehen kann, indem hierfür diese beiden Führungsschienen **2** auf ausreichenden Abstand hierfür gebracht werden können.

Bei der Lösung **Figur 3c** befinden sich ebenfalls mehrere Tragvorrichtungen **13,** an denen parallel nebeneinander verlaufend Führungsschienen **2** angeordnet sind, übereinander, aber nicht vertikal verfahrbar.

Stattdessen können die einzelnen, mit Fahrrädern **50** mehr oder weniger bestückten, Führungsschienen **2** in Querrichtung **11** zu ihrer Verlaufsrichtung **10** entlang der Tragvorrichtung **13** verfahren werden und an deren Ende in einer oder zwei beabstandeten, vertikal verlaufenden Führungsschiene **14** a, in der sie beispielsweise endseitig gelagert sind, vertikal auf die Höhe einer anderen, darüber oder darunter befindlichen, Tragvorrichtung **13** gebracht und in diese eingeschleust werden.

Auch hier ist der Abstand zweier benachbarter Führungsschienen **2** in Querrichtung **11** veränderbar, und wird im Aufbewahrungszustand minimiert, dagegen im für das Ein-/Aushängen soweit vergrößert, dass der Benutzer dazwischen durchgehen und das gewünschte Fahrrad **50** aus einer der beiden auf Abstand gebrachten Führungsschienen **2** entnehmen kann.

Der Vorteil dieser Lösungen besteht darin, dass die einzelnen Führungsschienen **2** jeweils endliche, gerade verlaufende Stücke einer Führungsschiene sind, die einfach und kostengünstig herzustellen sind, und entlang derer die Schlitten **3** mit den Haken **1** leicht verfahren werden können.

Die **Figuren 2a****,** **b** zeigen dagegen in der Aufsicht von oben eine Aufhänge-Vorrichtung **30,** bei der die Führungsschiene **2** in einer horizontalen Ebene verläuft, aber mit Hilfe von in der Aufsicht betrachteten Biegungen beispielsweise zu einer endlosen, etwa mäanderförmigen, Führungsschiene **2** ausgebildet sein kann, sodass innerhalb einer begrenzten Grundfläche auf nur einer Ebene sehr viele Fahrräder **50** untergebracht werden können.

Das Problem ist dabei zum einen die Führung der Schlitten **3** mit den daran befindlichen Haken **1** um eine solche Biegung der Führungsschiene **2,** ohne dass die darin eingehängten Fahrräder **50** miteinander kollidieren und zum anderen die Tatsache, dass eine Ein-/Aushängestation **31** für eine solche Aufhänge-Vorrichtung **30** meist nur von der Außenseite der endlos umlaufenden Schiene her zugänglich ist.

**Figur 2a** zeigt eine solche Bauform der Aufhänge-Vorrichtung **30** in der Aufsicht betrachtet im Ganzen, wobei die in Verfahrrichtung **10** aufeinander folgenden Fahrräder **50** von oben betrachtet abwechselnd mit dem Lenker **55** einmal auf der einen und einmal auf der anderen Seite der Führungsschiene **2** aufbewahrt werden sollen.

Dennoch ist an der Ein-/Aushängestation **31** der Zugang nur von einer Seite, nämlich von der Außenseite her, an die Führungsschiene **2** möglich, wie besser in der vergrößerten Darstellung der **Figur 2b** ersichtlich, in der auch noch die eine solche Aufhänge-Vorrichtung in der Regel umgebenden Wände **25** dargestellt sind, über denen sich in der Regel auch ein nicht dargestelltes Dach zum Schutz der aufbewahrten Fahrräder **50** befindet.

Die Ein-/Aushängestation **31** besteht nun aus einzelnen, nach außen hin offenen Boxen, die durch quer zur Verlaufsrichtung **10** der Führungsschiene **2** sich erstreckende Trennwände **23** voneinander abgetrennt sein können. Die die Ein-/Aushängestation **31** in Verlaufsrichtung **10** der Führungsschiene **2** begrenzenden Trennwände **23** besitzen dabei Durchgangsöffnungen, die groß genug sind, um nicht nur die Führungsschiene **2,** sondern auch die daran hängenden Fahrräder **50** hindurch treten zu lassen in den für Benutzer **100** nicht zugänglichen Innenraum **24** der Aufhänge-Vorrichtung **30.**

Da es für den Benutzer **100** in der Ein-/Aushängestation **31** einfacher ist, sein Fahrrad **50** mit dem Lenker **55** zur Außenseite hinweisend einhängen zu können, werden die meisten Benutzer **100** die Fahrräder mit dieser Orientierung an den jeweiligen Haken **1** hängen, wobei aus Übersichtlichkeitsgründen in Figur **2**b die Haken **1** und Schlitten **3** nicht dargestellt sind.

Da im Aufbewahrungsbereich, also im Innenraum **24** der Aufhänge-Vorrichtung **30,** jedoch die Fahrräder **50** aus Gründen des minimalsten Abstandes im Aufbewahrungszustand entlang der Führungsschiene **2** mit wechselseitig links und rechts der Schiene befindlichen Lenkern **55** aufbewahrt werden sollen, ist beim Eintritt eines neu eingehängten Fahrrades **50** durch die letzte Trennwand **23** in den Innenraum **24** hinein zunächst vorzugsweise ein Sensor **26** notwendig, der die Lage des Lenkers **55** in der Aufsicht betrachtet auf der Außenseite oder Innenseite der Führungsschiene **2** detektiert. In Verfahrrichtung **10** ist daran anschließend eine Wendevorrichtung **27** vorgesehen, die automatisch bei falscher Orientierung des Lenkers **55** das Fahrrad **50** in der Aufsicht betrachtet um **180** Grad um die Vertikale **12** dreht.

Vorzugsweise ist auch am Übergang vom Innenraum **24** zurück in die Ein-/Aushängestation **31** eine solche Wendestation **27** vorhanden, um dort alle Fahrräder **50** wieder mit dem Lenker **55** zur offenen Seite der Station **31** hinweisend dem Benutzer **100** zu präsentieren.

Eine sehr einfache Möglichkeit einer solchen Wendevorrichtung **27** ist in der Aufsicht betrachtet in **Figur 2c** symbolisch dargestellt, wobei die in Verlaufsrichtung **10** vorhandene Führungsschiene **2** aus Übersichtlichkeitsgründen weggelassen ist.

Der nicht dargestellte Haken **1** ist an dem angedeuteten Schlitten **3** in seiner Drehlage um die Vertikale **12** nicht fix angeordnet, sondern drehbar um einen Drehzapfen **28,** sodass auch das in den Haken **1** eingehängte Fahrrad **50** um den Schlitten **3** drehbar ist, dessen Stellung des Lenkers **55** an dem jeweiligen Schlitten **3** hier ebenfalls nur angedeutet ist.

Wenn also beispielsweise in einen Schlitten **3 -** wie ganz rechts in Figur **2c** dargestellt - ein Fahrrad **50** so eingehängt wurde, dass es mit seinem Lenker **55** sich in der Aufsicht betrachtet links der Führungsschiene **2** befindet, aber für den Aufbewahrungszustand sich der Lenker **55** rechts der Führungsschiene **2** befinden müsste, so ragen in den Bewegungsweg der - in diesem Fall um je **90** Grad in der Aufsicht betrachtet beabstandete - Rotorarme **29** eines Drehkreuzes **32,** mit dem der Haken **1** drehfest verbunden ist, Anlaufkörper **33** hinein, die in der Aufsicht betrachtet beispielsweise die Form einer in das Drehkreuz **32** hineinragenden Spitze aufweisen.

Das in Verfahrrichtung **10** mit dem Schlitten **3** mit bewegte Drehkreuz **29** wird durch den ersten Anlaufkörper **33** um **90** Grad gedreht, und durch den in Längsrichtung **10** beabstandeten zweiten Anlaufkörper **33** um weitere **90** Grad gedreht, sodass sich danach der Lenker **55** wie gewünscht auf der rechten Seite der Führungsschiene **2** befindet.

Da meistens nur an jeden zweiten Schlitten **3** das Fahrrad **50** auf diese Art und Weise gedreht werden muss, ist entweder nur an jedem zweiten Schlitten **3** ein solches Drehkreuz **32** vorhanden oder die Anlaufkörper **33** sind in Querrichtung **11** in und aus dem Bewegungsweg der Arme **29** des Drehkreuzes **32** bewegbar, vorzugsweise gesteuert von einer Steuerung **20,** wie sie symbolisch in **Figur 2b** dargestellt ist und alle beweglichen Teile und hierfür vorgesehenen Motore der erfindungsgemäßen Aufhänge-Vorrichtung **30** steuert.

Die Figuren **4a****,** **b** zeigen eine Möglichkeit des Antriebs der Schlitten **3** entlang der Führungsschiene **2:**
In diesem Zusammenhang wird vor allem aus **Figur 2b** heraus die Problematik klar, dass bei Kurvenfahrt die Fahrräder **50** einen größeren Abstand in Verfahrrichtung **10** zueinander einnehmen müssen als im optimal angenäherten Aufbewahrungszustand entlang eines geraden Stückes der Führungsschiene **2,** um ein Kollidieren vor allem der auf der Kurveninnenseite liegenden Lenker **55** zueinander zu vermeiden.

Dies könnte durch eine der vorgenannten Maßnahmen zwar eventuell auch gelöst werden, zusätzlich oder ergänzend ist jedoch auch ein entsprechender spezieller Antrieb im Kurvenbereich hierzu geeignet, wie in Figur **4**a und **4**b gezeigt:
Denn um in einer Aufhängevorrichtung **30** gemäß **Figur 2a****,** b die Schlitten **3** entlang der Führungsschiene **2** motorisch angetrieben und gesteuert transportieren zu können, besteht eine Möglichkeit darin, alle Schlitten **3** einer endlosen Schiene **2** miteinander in Form einer endlosen Kette zu verbinden, und zu diesem Zweck zwischen je zwei aufeinander folgenden Schlitten **3** ein Abstandselement **7,** insbesondere ein längenveränderbares Abstandselement **7,** anzuordnen.

Dadurch kann in gewünschten Bereichen, beispielsweise in der Ein-/Aushängestation **31** oder in einer in der Aufsicht betrachteten Kurve der Führungsschiene **2,** beispielsweise ein größerer Abstand **15**b zwischen zwei aufeinanderfolgenden Schlitten **3** eingestellt werden als ein möglicher minimaler Abstand **15**a, wie in **Figur 4b** dargestellt. Ein solches Abstandselement **7** kann beispielsweise eine teleskopierbare gerade Stange sein, die vorzugsweise nicht innerhalb der Führungsschiene **2** verläuft, um auch eine Fahrt durch eine Kurve der Führungsschiene **2** zu ermöglichen.

Wenn eine solche über teleskopierbare Abstandselemente **7** verbundene Kette aus Schlitten **3** in einem Teilabschnitt mittels Schieben der Schlitten **3** angetrieben wird, so nehmen die geschobenen Schlitten **3** den Minimalabstand **15**a zueinander ein, wie in **Figur 4a** **rechts unten** dargestellt.

Wenn in anderen Bereichen der Kette aus Schlitten **3** die miteinander verbundenen Schlitten **3** gezogen werden, nehmen die gezogenen Schlitten **3** den maximalen möglichen Abstand **15**b zueinander ein, wie in Figur **4**a rechts oben dargestellt.

Dies kann man beispielsweise dafür verwenden, dass in geraden Abschnitten der Führungsschiene **2,** die dem Anstauen von Fahrrädern **50** und damit Schlitten **3** dienen sollen, also die in zum Beispiel Figur **2**a in Längsrichtung des Zeichnungsblattes verlaufenden Abschnitte der Führungsschiene **2,** am in Verfahrrichtung **10** hinteren Ende eines solchen Abschnittes ein schiebender Schlittenantrieb gemäß Figur **4**a, untere Bildhälfte, verwendet wird.

In Bereichen wie etwa einer Kurve der Führungsschiene **2,** in denen ein maximaler Abstand **15**a gewünscht ist, wird am in Verfahrrichtung **10** vorderen Ende dagegen ein ziehender Antrieb eingesetzt, wie anhand der Figur **4**a in der oberen Bildhälfte dargestellt und nachfolgend geschrieben.

Prinzipiell kann ein solcher Antrieb beispielsweise dadurch erfolgen, dass von einigen oder vorzugsweise allen Schlitten **3** ein Antriebszapfen **21** vorsteht, beispielsweise aus der Führungsschiene **2** nach oben vorsteht oder auch zur Seite vorsteht, der von einem geeigneten Antriebselement erfasst und weiter transportiert werden kann.

Beispielhaft ist in **Figur 4b** ein Rotor **19**a, b dargestellt, der um eine vertikale Achse mittels eines Motors **22,** der von einer Steuerung **20** gesteuert wird, angetrieben ist und Rotorarme **29**a, b aufweist, die in den Bewegungsweg der Antriebszapfen **21** hinein ragen.

In **Figur 4a** ist in der unteren Bildhälfte ein Rotor **19**b dargestellt mit seiner Rotorachse seitlich beabstandet zur Führungsschiene **2,** dessen Rotorarme **29**b in einem solchen gleichmäßigen Winkelabstand zueinander über den gesamten Umfang verteilt vorhanden sind und mit einer solchen Länge, dass die Antriebszapfen einiger oder aller in deren Wirkbereich gelangender Antriebszapfen **21** ergriffen und durch entsprechende Drehrichtung des Rotors **19**b in Verfahrrichtung **10** weiter geschoben werden. Im dargestellten Beispiel sind die Rotorarme **35**b so über einen solchen Winkelabstand zueinander vorhanden, dass der Antriebszapfen **21** jedes Schlittens **3** ergriffen und weitergeschoben wird, und die Schlitten **3** stromabwärts des Rotors **19**b von den angetriebenen Schlitten **3** vorwärts geschoben werden mit minimalem Abstand **15**b zueinander.

Wie die **Figur 4a** in unserem Bereich jedoch gut erkennen lässt, könnten hierbei auch nur so viele Rotorarme **35**b vorhanden sein, dass lediglich jeder zweite oder gar dritte Schlitten **3** und dessen Antriebszapfen **21** weiter transportiert wird, was ja für ein Vorwärtsschieben der gesamten Ketten aus Schlitten **3** ausreichend wäre.

Will man nun im **Figur 4a** darüber liegenden Kurvenbereich einen größeren Abstand **15**b zwischen den Schlitten **3** erzielen, kann dort beispielsweise ein Rotor **19**a mit entsprechender Winkelteilung seiner Rotorarme **35**a und entsprechender Drehgeschwindigkeit vorzugsweise am Ende des Kurvenbereiches eingesetzt werden - wie beispielhaft in einer Bauform auf der Kurveninnenseite und in der anderen Bauform auf der Kurvenaußenseite dargestellt - , um die teleskopierbare Stange **7** auf maximale Länge auseinander zu ziehen und dadurch diesen größeren Abstand **15**b zwischen den Schlitten **3** zu bewirken.

### BEZUGSZEICHENLISTE

- 1: Haken
- **1'**: Hakenebene
- 2: Führungsschiene
- 3: Schlitten
- 4: Einhängeöffnung
- 5: Vertikaler Abstand
- 6: Band
- 7: (horizontales) Abstandselement
- 8: motorischer Antrieb
- **9**: Winkel
- **10**: Verfahrrichtung, Längsrichtung
- **11**: horizontale Querrichtung
- **11'**: Fahrradebene
- **12**: Vertikale
- **13**: Tragvorrichtung
- **14**: Tragvorrichtung
- **14a**: vertikale Führungsschiene
- **15, 15** a, b: horizontaler Abstand
- **16**: Teleskoparm
- **17**: Schwenkarm
- **18**: Schwenkachse
- **19**a, b: Rotor
- **20**: Steuerung
- **21**: Antriebs-Zapfen
- **22**: Motor
- **23**: Trennwand
- **24**: Innenraum
- **25**: Wand
- **26**: Sensor
- **27**: Wendevorrichtung
- **28**: Drehzapfen
- **29**a**,** b: Rotorarm
- **30**: Aufhänge-Vorrichtung
- **31**: Ein-/Aushängestation
- **32**: Drehkreuz
- **33**: Anlauf-Körper
- **34**: Führungsrolle
- **35**a**,** b: Rotorarm

- **50**: Fahrrad
- **51**: Vorderrad
- **52**: Hinterrad
- **53**: Rahmen
- **54**: Ritzelsatz
- **55**: Lenker
- **56**: Sattel

- **100**: Benutzer

- B: Breite
- L: Länge

## Patentansprüche

1. Aufhänge-Vorrichtung (**30**) für Fahrräder (**50**) mit
- mehreren in je einer Hakenebene (**1'**) angeordneten, zu einer Seite hin offenen oder öffnungsfähigen, Haken (**1**) zum Einhängen eines Fahrrades (**1**) mit der Felge seines Vorderrades (**51**) oder Hinterrades (**52**),
- einer wenigstens abschnittsweise im Wesentlichen horizontal verlaufenden Führungselement, insbesondere einer Führungsschiene (**2**),
- mehreren in der Führungsschiene (**2**) in deren Längsrichtung (**10**) verfahrbaren Schlitten (**3**), von denen jeweils wenigstens ein Haken (**1**) abragt, vorzugsweise nach unten,
**dadurch gekennzeichnet, dass**
- die Verfahrrichtung (**10**), die Längsrichtung, in der Hakenebene (**1'**) oder einem spitzen Winkel (**9**) hierzu liegt,
- der Winkel (**9**) fix oder fixierbar ist.

2. Aufhänge-Vorrichtung nach Anspruch **1**,
**dadurch gekennzeichnet, dass**
- an jedem Schlitten (**3**) zwei in Verfahrrichtung (**10**) zueinander beabstandete Haken (**1**) angeordnet sind, die mit ihrer Einhängeöffnung (**4**) von dem anderen Haken (**1**) jeweils weg weisen
und/oder
- das Führungs-Element ein auf Rollen umlaufendes, endloses Tragseil ist, an dem die Schlitten (**3**) wenigstens in Abschnitten des Tragseiles in Längsrichtung fest positioniert und fixiert sind.

3. Aufhänge-Vorrichtung nach einem der vorhergehenden Ansprüche,
**dadurch gekennzeichnet, dass**
- entweder die Haken (**1**) alle in dem gleichen vertikalen Abstand (**5**) zur Führungsschiene (**2**) angeordnet sind,
- oder die Haken (**1**) abwechselnd mit mindestens zwei unterschiedlichen vertikalen Abständen (**5**a, b) zur Führungsschiene (**2**) angeordnet sind, deren Abstand zueinander ausreichend groß ist, dass zwei im benachbarten Haken (**1**) eingehängte Fahrräder (**50**) sich mit ihren Lenkern in der vertikalen Richtung (**12**) nicht überschneiden.

4. Aufhänge-Vorrichtung nach einem der vorhergehenden Ansprüche,
**dadurch gekennzeichnet, dass**
- die Haken (**1**) als Doppel-Haken ausgebildet sind mit zwei in horizontaler Querrichtung zur Hakenebene (**1'**) beabstandeten einzelnen Haken (**1**), deren Abstand insbesondere verstellbar ist
und/oder
- der Haken (**1**) an dem Schlitten (**3**) in seinem vertikalen Abstand (**5**) veränderbar angeordnet ist, insbesondere mittels einer Teleskopeinrichtung oder eines im Schlitten (**3**) aufgewickelten, im abgewickelten Zustand blockierbaren, Bandes (**6**).

5. Aufhänge-Vorrichtung nach einem der vorhergehenden Ansprüche,
**dadurch gekennzeichnet, dass**
- entweder zueinander benachbarte Schlitten (**3**) außer über die Führungsschiene (**2**) keine körperliche Verbindung zueinander besitzen,
- oder zueinander benachbarte Schlitten (**3**) über ein in der Länge veränderbares Abstandselement (**7**), insbesondere ein teleskopierbares Abstandselement oder ein nur auf Zug belastbares Abstandselement, wie etwa ein Seil, miteinander verbunden sind.

6. Aufhänge-Vorrichtung nach einem der vorhergehenden Ansprüche,
**dadurch gekennzeichnet, dass**
- das in der Länge veränderbare Abstandselement (**7**) einen minimalen und einen maximal möglichen horizontalen Abstand (**15**) zwischen benachbarten Schlitten (**3**) vorgibt und insbesondere
- der minimale Abstand mindestens **25** cm, besser mindestens **30** cm, besser mindestens **35** cm beträgt und/oder der maximale Abstand (**15**a) abhängig vom kleinsten in der Aufhänge-Vorrichtung (**30**) vorhandenen Krümmungsradius (R) ausgewählt wird, und insbesondere mindestens **45** cm, insbesondere besser mindestens **50** cm, besser mindestens **55** cm beträgt und/oder **0,25** m² geteilt durch den Krümmungsradius (R) beträgt, jedoch nicht geringer ist als der minimale Abstand auf dem geraden Abschnitt.

7. Aufhänge-Vorrichtung nach einem der vorhergehenden Ansprüche,
**dadurch gekennzeichnet, dass**
- die Hakenebene (**1'**) in einem solchen spitzen Winkel (**9**) zur Verfahrrichtung (**10**) der Schlitten (**3**) steht, dass in der Vertikalen (**12**) betrachtet die Lenker (**55**) zweier benachbarter Fahrräder (**50**) in Richtung lotrecht zur Hakenebene (**1'**), der Fahrradebene (**11'**), nicht überlappen
und/oder
- die Öffnung (**4**) des Haken (**1**) verschließbar ist, insbesondere durch eine am Haken befestigte, schwenkbare Schließ-Falle, und insbesondere die Schließ-Falle im geschlossenen Zustand absperrbar ist.

8. Aufhänge-Vorrichtung nach einem der vorhergehenden Ansprüche,
**dadurch gekennzeichnet, dass**
- der Haken (**1**) gegenüber dem Schlitten (**3**) in der horizontalen Querrichtung (**11**) verlagerbar ist zwischen einer in der Aufsicht betrachteten angenäherten und einer in der Aufsicht betrachtet beabstandeten Lage und insbesondere
- der Haken (**3**) zur Änderung seines horizontalen Abstandes in Querrichtung (**11**) gegenüber dem Schlitten (**3**) an einem in seiner Erstreckungsrichtung teleskopierbaren, im Wesentlichen horizontalen, Teleskoparm (**16**) oder an einem um eine Schwenkachse (**18**) verschwenkbaren Schwenkarm (**17**) gelenkig befestigt ist.
(Antrieb / Steuerung)

9. Aufhänge-Vorrichtung nach einem der vorhergehenden Ansprüche,
**dadurch gekennzeichnet, dass**
- die Schlitten (**3**) in der Führungsschienen (**2**) motorisch verfahrbar, insbesondere mittels einer Steuerung (**20**) gesteuert motorisch verfahrbar, sind und insbesondere
- die Steuerung (**20**) und/oder die horizontalen Abstandselemente (**7**) zwischen den Schlitten (**3**) in der Lage sind, den Abstand zwischen benachbarten Schlitten (**3**) zu variieren.
(Figur **2**a, b)

10. Aufhänge-Vorrichtung nach einem der vorhergehenden Ansprüche,
**dadurch gekennzeichnet, dass**
- in einem Längsabschnitt der Führungsschiene (**2**), insbesondere einer in der Aufsicht betrachtet endlos geschlossen auflaufenden Führungsschiene (**2**), eine nur von der Außenseite bzw. nur einer Seite der Führungsschiene (**2**) zugängliche Ein-/Aushängestation (**31**) angeordnet ist, und am Übergang zwischen der Ein-/Aushängestation (**31**) und dem Aufbewahrungsbereich der für die Fahrräder (**50**) ein Sensor zur in der Aufsicht betrachteten Stellung der Lenker (**55**) eingehängter Fahrräder (**50**) links oder rechts der Führungsschiene (**2**) angeordnet ist und
- stromabwärts nachgeordnet, insbesondere unmittelbar nachgeordnet, eine Wendestation zum automatischen, insbesondere gesteuerten, Drehen der Fahrräder der Haken (**1**) um die Hochachse um insbesondere **180** Grad vorhanden ist und insbesondere
- die Steuerung (**20**) in der Lage ist, durch Eingabe der z.B. Nummer oder Bezeichnung eines bestimmten Schlittens (**3**) alle Schlitten entlang der Führungsschiene (**2**) so zu verfahren, dass der gewünschte Schlitten (**3**) sich in der Ein-/Aushängestation (**31**) befindet.
(Figur **3**a, b)

11. Aufhänge-Vorrichtung nach einem der vorhergehenden Ansprüche,
**dadurch gekennzeichnet, dass**
mehrere gerade Führungsschienen (**2**) einer definierten, insbesondere für alle Führungsschienen (**2**) gleichen, Länge (L) vorhanden sind, und/oder die Führungsschienen (**2**) quer zu ihrer Längsrichtung (**10**), insbesondere entlang einer Tragvorrichtung (**13**), verfahrbar sind, insbesondere motorisch angetrieben verfahrbar sind wobei die Tragvorrichtung (**13**) in vertikalen Führungsschienen (**14**a) vertikal verfahrbar sein kann.
(Figur **3**c)

12. Aufhänge-Vorrichtung nach einem der vorhergehenden Ansprüche,
**dadurch gekennzeichnet, dass**
- die Führungsschienen (**2**) in Querrichtung (**11**) entlang der Tragvorrichtung (**13**) in vertikaler Richtung (**12**) entlang vertikaler Führungsschienen (**14**a) verfahrbar sind, insbesondere auf ein um die Erstreckung eines eingehängten Fahrrades (**50**) beabstandetes zweites Höhen-Niveau verfahrbar sind und in eine dort vorhandene weitere horizontale Tragvorrichtung (**13**) einfahrbar sind
und/oder
- die Führungsschiene (**2**) in der Aufsicht betrachtet eine endlose, umlaufend geschlossene, Schiene ist, und an wenigstens einer Position entlang der umlaufenden Führungsschiene (**2**) eine Ein-/Aushängestation (**31**) für Fahrräder (**50**) angeordnet ist, und in den Bereichen abseits der Ein-/Aushängestation (**31**) die Führungsschiene (**2**) und die Fahrräder (**50**) nicht für den Benutzer (**100**) zugänglich ist.

13. Aufhänge-Vorrichtung nach einem der vorhergehenden Ansprüche,
**dadurch gekennzeichnet, dass**
- alle Schlitten (**3**) in der umlaufenden geschlossenen Führungsschiene (**2**) über Abstandselemente (**7**) zu einer endlosen Kette von Schlitten (**3**) miteinander verbunden sind und insbesondere die Abstandselemente (**7**) und/oder die Steuerung (**20**) so ausgebildet sind sind, dass sie in der Lage sind, den Abstand benachbarter Schlitten (**3**) zu verändern
und/oder
- die Schlitten (**3**) in Längsrichtung (**10**) beabstandet wenigstens je eine Führungsrolle (**34**) aufweisen, mit denen der Schlitten (**3**) an der Führungsschiene (**2**) geführt wird um auch Biegungen der Führungsschiene (**2**) durchlaufen zu können.

14. Aufhänge-Vorrichtung nach einem der vorhergehenden Ansprüche,
**dadurch gekennzeichnet, dass**
- in ersten Abschnitten der Führungsschienen (**2**), insbesondere in gerade verlaufenden Abschnitten, die Schlitten (**3**) durch einen Antrieb entlang der Führungsschienen (**2**) geschoben werden und dabei insbesondere das längenveränderbare Abstandselement (**7**) seine minimale Länge einnimmt,
und/oder
- in zweiten Abschnitten der Führungsschienen (**2**), insbesondere in gekrümmt verlaufenden Abschnitten oder in der Ein-/Aushängestation (**31**), die Schlitten (**3**) durch einen Antrieb entlang der Führungsschienen (**2**) gezogen werden, und dabei insbesondere das längenveränderbare Abstandselement (**7**) seine maximale Länge einnimmt.

15. Aufhänge-Vorrichtung nach einem der vorhergehenden Ansprüche,
**dadurch gekennzeichnet, dass**
- entlang der Führungsschiene (**2**) mindestens ein von einem Motor (**22**) angetriebene Schlitten-Antrieb vorhanden ist, der insbesondere von einer Steuerung (**20**) gesteuert wird, der an den Schlitten (**3**), insbesondere je einem von dem Schlitten (**3**) abstrebenden Antriebs-Zapfen (**21**) angreift, insbesondere der Schlitten-Antrieb einen Rotor (**19** a, b) umfasst, dessen Rotorarme (**35** a, b) in den Bewegungsweg des Schlitten (**3**), insbesondere dessen Antriebs-Zapfens (**21**), hineinragen,
und/oder
- der Antrieb bei in der Aufsicht betrachtet geraden oder leicht gekrümmten Abschnitten der Führungsschiene (**2**) am in Verfahrrichtung (10) stromaufwärts gegen Ende angeordnet ist und/oder bei stark gekrümmten Abschnitten am stromabwärtigen Ende angeordnet ist.

16. Aufhänge-Vorrichtung nach einem der vorhergehenden Ansprüche,
**dadurch gekennzeichnet, dass**
- die Aufhänge-Vorrichtung (**30**) einen Sensor (**26**) umfasst, der bei entlang der Führungsschienen (**2**) belegten Fahrrädern (**50**) erkennen kann, ob sich in der Aufsicht betrachtet der Lenker (**55**) auf der linken oder der rechten Seite der Führungsschiene (**2**) befindet
und/oder
- die Führungsschienen (**2**) eine stillstehende, starre oder biegsame, Führungsschiene (**2**) ist.

17. Aufhänge-Vorrichtung nach einem der vorhergehenden Ansprüche,
**dadurch gekennzeichnet, dass**
- der Führungsschiene (**2**) zugeordnet eine, insbesondere von der Steuerung (**20**) gesteuerte, Wende-Vorrichtung (**27**) vorhanden ist, die in der Lage ist, einen mit einem Angriffselement ausgestatteten Haken (**1**) eines Schlitten (**3**) um die Hochachse so zu drehen, dass der Lenker (**55**) eines daran hängenden Fahrrades (**50**) in der Aufsicht betrachtet sich auf der gewünschten Seite der Führungsschiene (**2**) befindet, insbesondere das von den in Verfahrrichtung (**10**) hintereinander angeordneten Schlitten (**3**) nur jeder zweite Schlitten ein Angriffselement aufweist, welches in der Wendestation wirksam wird
und/oder
- das Angriffselement ein in einer Querebene zu Hochachse liegender, drehfest mit dem Haken (**1**) und drehbar gegenüber dem Schlitten (**3**) gelagerter Wendestern ist, und seitlich neben der Führungsschiene (**2**), vorzugsweise in Längsrichtung (**10**) beabstandet mehrere, nur in Querrichtung für fahrbare Vorsprünge angeordnet sind, die in den Bewegungsweg des Wendesternes hineinragen.
